# EUROPEAN PATENT APPLICATION

(11) **EP 4 510 367 A1**
(43) Date of publication of application: **19.02.2025**
(21) Application number: 22958429.7
(22) Date of filing: 15.09.2022
(51) Int. Cl.: H01M 50/54

(54) **BATTERY, ELECTRIC DEVICE, AND METHOD FOR MANUFACTURING BATTERY**

(71) Applicant: Contemporary Amperex Technology Co., Limited, Ningde, Fujian 352100 (CN)
(72) Inventor: CHENG, Qi, Ningde, Fujian 352100 (CN); WANG, Hong, Ningde, Fujian 352100 (CN); LI, Quankun, Ningde, Fujian 352100 (CN); LIU, Jiang, Ningde, Fujian 352100 (CN); TANG, Daichun, Ningde, Fujian 352100 (CN)
(74) Representative: Frick, Robert
(86) International application number: PCT/CN2022/119011
(87) International publication number: WO 2024/055236

(57) **Abstract**

Embodiments of the present application provide a battery, a power consumption apparatus, and a method for producing a battery. The battery includes: a battery module including a first battery cell and a second battery cell that are disposed in a stacked manner along a first direction, where the first battery cell and the second battery cell are located at a first end of the battery module in a second direction, a first electrode output part of the first battery cell is connected to a second electrode output part of the second battery cell, the first direction is a thickness direction of the battery, and the second direction is a length direction of the battery; and a supporting member disposed in a first accommodating space enclosed by a first electrode output part and a second electrode output part, and configured to support the first electrode output part and the second electrode output part. The battery, the power consumption apparatus, and the method for producing the battery of the embodiments of the present application can reduce the risk of tearing at a joint of the battery cells.

## Description

### TECHNICAL FIELD

The present application relates to the field of battery technologies, and in particular, to a battery, a power consumption apparatus, and a method for producing a battery.

### BACKGROUND

To improve the capacity of a battery, a plurality of battery cells connected are generally loaded into a shell with a certain strength to form the battery. Because the reliability of a battery during operation is related to the safety of the whole battery and even a power consumption apparatus, there are higher requirements for the stability of an electrical connection of the battery in battery design.

### SUMMARY

The present application provides a battery, a power consumption apparatus, and a method for producing a battery, which can reduce the risk of tearing at a joint of battery cells.

In a first aspect, a battery is provided, including: a battery module including a first battery cell and a second battery cell that are disposed in a stacked manner along a first direction, where the first battery cell and the second battery cell are located at a first end of the battery module in a second direction, a first electrode output part of the first battery cell is connected to a second electrode output part of the second battery cell, the first direction is a thickness direction of the battery, and the second direction is a length direction of the battery; and a supporting member disposed in a first accommodating space enclosed by a first electrode output part and a second electrode output part, and configured to support the first electrode output part and the second electrode output part.

In this embodiment, since the first battery cell and the second battery cell are disposed in a stacked manner along the first direction, the first electrode output part of the first battery cell and the second electrode output part of the second battery cell are connected, and then they enclose to form the first accommodating space, and the supporting member is disposed in the first accommodating space to support the first electrode output part and the second electrode output part, which can reduce the risk of tearing between the first electrode output part and the second electrode output part and improve the stability of an electrical connection of the battery.

In a possible implementation manner, the supporting member includes two supporting faces disposed oppositely along the first direction, and the two supporting faces are configured to support the first electrode output part and the second electrode output part, respectively.

In this embodiment, the two supporting faces of the supporting member support the first electrode output part and the second electrode output part, respectively, which can reduce the risk of tearing between the first electrode output part and the second electrode output part.

In a possible implementation manner, the supporting member further includes a connecting face, and the two supporting faces extend towards the battery module from two ends of the connecting face in the first direction, respectively; the first electrode output part and the second electrode output part are directly connected, and in the second direction, a gap exists between the connecting face and the first electrode output part and the second electrode output part, or the first electrode output part and the second electrode output part are connected through a connecting member, and in the second direction, a gap exists between the connecting face and the connecting member.

In this embodiment, in the second direction, a gap exists between the supporting member and the first electrode output part and the second electrode output part or a gap exists between the supporting member and a connecting member configured to connect the first electrode output part and the second electrode output part, which can prevent a supporting force against the electrode output parts from damaging the electrode output parts.

In a possible implementation manner, the supporting member has a cavity, the supporting member includes two supporting walls disposed oppositely along the first direction, the supporting walls are side walls of the cavity, and the two supporting faces are two faces of the two supporting walls facing away from each other, respectively.

In this embodiment, the supporting member is configured as a cavity structure, which can reduce the weight of the supporting member, thereby reducing the weight of the battery.

In a possible implementation manner, the supporting member further includes at least one supporting rib disposed between the two supporting walls.

In this embodiment, the supporting rib is disposed between the first supporting wall and the second supporting wall, which can enhance the rigidity of the supporting member.

In a possible implementation manner, the battery cell is a pouch battery cell, and in the second direction, the supporting member extends to a packaging position of the first battery cell and the second battery cell.

In this embodiment, the battery cell is configured as a pouch battery cell, which can reduce the weight of the battery and improve the energy density. In addition, the supporting member extends to the packaging position of the first battery cell and the second battery cell, which can better support the first electrode output part and the second electrode output part.

In a possible implementation manner, a gap exists between the supporting member and the packaging position.

In this embodiment, a gap is provided between the supporting member and the packaging position, which can facilitate the supporting member to be assembled into the first accommodating space enclosed by the first electrode output part and the second electrode output part.

In a possible implementation manner, the battery further includes: a protection member disposed at the first end and being away from the battery module relative to the supporting member, where a second accommodating space is formed between the protection member and the supporting member, and at least part of the first electrode output part and at least part of the second electrode output part are disposed in the second accommodating space.

In this embodiment, the first electrode output part and the second electrode output part are disposed in the second accommodating space formed between the supporting member and the protection member, which can well protect the first electrode output part and the second electrode output part.

In a possible implementation manner, the protection member includes a first connecting part and two protrusions, the two protrusions protrude towards the battery module from two ends of the first connecting part in the first direction, and at least part of the first electrode output part and at least part of the second electrode output part are disposed in the second accommodating space formed between the two protrusions and the supporting member.

In a possible implementation manner, the supporting member includes a third end and a fourth end in a third direction, the third end is fixedly connected to the protection member, a first opening is formed between the fourth end and the protection member, the first opening is configured to guide at least part of the first electrode output part and at least part of the second electrode output part to be assembled into the second accommodating space, and the third direction is a width direction of the battery.

In this embodiment, one end of the supporting member in the third direction is fixedly connected to the protection member, and the other end thereof and the protection member form the first opening, so that at least part of the first electrode output part and at least part of the second electrode output part are inserted into the second accommodating space along the first opening, which can reduce the assembly complexity of the battery.

In a possible implementation manner, the supporting member and the protection member are integrally formed.

In this embodiment, the supporting member and the protection member are integrally formed, which can reduce the production process of the battery.

In a possible implementation manner, the supporting member and the protection member are made of a same material.

In a possible implementation manner, the second accommodating space penetrates through the protection member in a third direction, and the third direction is a width direction of the battery.

In this embodiment, the supporting member and the protection member are configured as two independent parts, which can improve the assembly flexibility of the battery.

In a possible implementation manner, the supporting member is made of an insulating material.

In a possible implementation manner, the supporting member is made of at least one insulating material of foam, rubber, and plastic cement.

In a possible implementation manner, the supporting member is fixedly connected to the first electrode output part and the second electrode output part by means of adhesive bonding, respectively.

In this embodiment, the supporting member is fixedly connected to the first electrode output part and the second electrode output part by means of adhesive bonding, which can improve the structural strength between the supporting member and the first electrode output part and the second electrode output part such that the supporting member can better support the first electrode output part and the second electrode output part.

In a possible implementation manner, the two protrusions are fixedly connected to the first electrode output part and the second electrode output part by means of adhesive bonding, respectively.

In a possible implementation manner, the two protrusions are provided with adhesive injection holes, and an adhesive injection hole is configured to introduce a structural adhesive between the first electrode output part and the second electrode output part and the two protrusions.

In a possible implementation manner, the battery further includes: a first end cover disposed at the first end, the first end cover being fixedly connected to the first connecting part.

In a possible implementation manner, the battery further includes: a second end cover disposed at a second end of the battery module in the second direction, where the second end cover is provided with a positive electrode terminal and a negative electrode terminal, a positive electrode output part of the battery module is electrically connected to the positive electrode terminal, and a negative electrode output part of the battery module is electrically connected to the negative electrode terminal; and a housing provided with two openings, where the first end cover and the second end cover respectively cover the two openings, so as to package the battery module and the supporting member in the housing.

In a possible implementation manner, a shell of a battery cell in the battery module is a coating film.

In a second aspect, a power consumption apparatus is provided, including the battery in the first aspect or any one possible implementation manner in the first aspect, where the battery is configured to provide electric energy for the power consumption apparatus.

In a third aspect, a method for producing a battery is provided, including: connecting a first electrode output part of a first battery cell to a second electrode output part of a second battery cell, where the first battery cell and the second battery cell are disposed in a stacked manner along a first direction, and the first battery cell and the second battery cell are located at a first end of the battery in a second direction, the first direction is a thickness direction of the battery, and the second direction is a length direction of the battery; and assembling a supporting member into a first accommodating space enclosed by the first electrode output part and the second electrode output part, the supporting member being configured to support the first electrode output part and the second electrode output part.

### BRIEF DESCRIPTION OF THE DRAWINGS

To more clearly illustrate the technical solutions in the embodiments of the present application, the accompanying drawings that need to be used in the embodiments of the present application will be briefly introduced below. Apparently, the accompanying drawings described below merely illustrate some embodiments of the present application. Those of ordinary skill in the art may also derive other accompanying drawings from the accompanying drawings without creative efforts.
FIG. 1 is a schematic structural diagram of a vehicle disclosed in an embodiment of the present application.
FIG. 2 is a schematic front view of a battery disclosed in an embodiment of the present application.
FIG. 3 is a schematic enlarged view of part A in FIG. 2.
FIG. 4 is a schematic front view of a supporting member in the battery shown in FIG. 2.
FIG. 5 is a schematic diagram of assembly of a first end of a battery module according to an embodiment of the present application.
FIG. 6 is another schematic front view of a battery disclosed in an embodiment of the present application.
FIG. 7 is a schematic front view of a protection member in FIG. 6.
FIG. 8 is a schematic structural diagram of a supporting member according to an embodiment of the present application.
FIG. 9 is another schematic diagram of assembly of a first end of a battery module according to an embodiment of the present application.
FIG 10 is a schematic exploded view of a battery according to an embodiment of the present application.
FIG. 11 is a schematic block diagram of a method for producing a battery according to an embodiment of the present application.

In the accompanying drawings, the accompanying drawings are not drawn in actual scale.

### DESCRIPTION OF EMBODIMENTS

The implementation manner of the present application will be further described in detail below with reference to the accompanying drawings and embodiments. The following detailed description of the embodiments and the accompanying drawings are used to illustrate the principles of the present application in examples, but not to limit the scope of the present application, that is, the present application is not limited to the described embodiments.

In the description of the present application, it should be noted that the phrase "a plurality of" means two or more, unless otherwise specified. Orientations or positional relationships indicated by terms "upper", "lower", "left", "right", "inner", "outer", or the like are only for the convenience of describing the present application and simplifying the description, and do not indicate or imply that an apparatus or element referred to must have a specific orientation, be constructed and operated in a specific orientation, and therefore cannot be understood as limitations to the present application. In addition, terms such as "first", "second" and "third" are only used for descriptive purposes, and should not be understood as indicating or implying relative importance. "Vertical" is not vertical in a strict sense, but within an allowable range of error. "Parallel" is not parallel in a strict sense, but within an allowable range of error.

Orientation words appearing in the following description are all directions shown in the drawings, and are not intended to limit the specific structure of the present application. In the description of the present application, it should be further noted that unless otherwise explicitly specified and defined, terms such as "installation", "interconnection", and "connection" should be interpreted in a broad sense, for example, it may be a fixed connection, or a detachable connection, or an integrated connection; or it may be a direct connection, or an indirect connection through an intermediate medium. Those of ordinary skill in the art can understand the specific meanings of the above terms in the present application according to specific situations.

A word "embodiment" referred to in the present application means that a particular feature, structure, or characteristic described in combination with the embodiment can be included in at least one embodiment of the present application. The appearances of the word in various places in the specification are not necessarily all referring to the same embodiment, nor are separate or alternative embodiments mutually exclusive of other embodiments. Those skilled in the art understand, in explicit and implicit manners, that an embodiment described in the present application may be combined with other embodiments.

The term "and/or" in the present application is only a kind of association relationship describing associated objects, which means that there may be three kinds of relationships. For example, A and/or B may mean the following three cases: A exists alone, both A and B exist at the same time, and B exists alone. In addition, the character "/" in the present application generally indicates that the associated objects before and after the character are in an "or" relationship.

In the present application, "a plurality of" means two or more (including two), similarly, "a plurality of groups" means two or more groups (including two groups), and "a plurality of sheets" means two or more sheets (including two sheets).

In the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited by the embodiments of the present application. The battery cell may be cylindrical, flat, cuboid or in another shape, which is not limited by the embodiment of the present application. The battery cells are generally divided into three types according to the way of packaging: a cylindrical battery cell, a prismatic battery cell, and a pouch battery cell, which is not limited by the embodiment of the present application.

The battery cell includes an electrode assembly and an electrolyte, and the electrode assembly includes a positive sheet, a negative sheet, and a separator. The operation of the battery cell mainly relies on the movement of metal ions between the positive sheet and the negative sheet. The positive sheet includes a positive current collector and a positive active material layer. The positive active material layer is coated on a surface of the positive current collector, and a positive current collector not coated with the positive active material layer protrudes from the positive current collector coated with the positive active material layer and is used as a positive tab. Taking a lithium-ion battery as an example, the material of the positive current collector may be aluminum, and the positive electrode active material may be lithium cobalt oxides, lithium iron phosphate, ternary lithium or lithium manganate, etc. The negative sheet includes a negative current collector and a negative active material layer. The negative active material layer is coated on a surface of the negative current collector, and a negative current collector not coated with the negative active material layer protrudes from the negative current collector coated with the negative active material layer and is used as a negative tab. The material of the negative current collector may be copper, and the negative electrode active material may be carbon or silicon, etc. In order to ensure that no fusing occurs when a large current passes, there are a plurality of positive tabs which are stacked together, and there are a plurality of negative tabs which are stacked together. A material of the separator may be PP, PE, or the like. In addition, the electrode assembly may be in a winding structure or a laminated structure, and the embodiments of the present application are not limited thereto.

To improve the capacity of a battery, a plurality of battery cells connected are generally connected in series, connected in parallel, or in series-parallel to form a battery module, and then are loaded into a shell with a certain strength. During use of the battery, a joint between the battery cells may shake, such that there is a risk of tearing.

In view of this, an embodiment of the present application provides a battery. A supporting member is disposed in an accommodating space enclosed by electrode output parts connected of a battery cell located at one end of the battery in a length direction, so as to support the electrode output part, which can reduce the risk of tearing at a joint of the battery cells and improve the stability of an electrical connection of the battery.

Technical solutions described in embodiments of the present application are applicable to various apparatuses using a battery, for example, a mobile phone, a portable device, a notebook computer, an electromobile, an electric toy, an electric tool, an electric vehicle, a ship, a spacecraft, or the like. For example, the spacecraft may include an airplane, a rocket, a space shuttle, a spaceship, and the like.

It should be understood that technical solutions described in embodiments of the present application are not only limited to the power consumption apparatus described above, but also suitable to all apparatuses using a battery. However, for the sake of brief illustration, description is made by an example of an electric vehicle in the following embodiments.

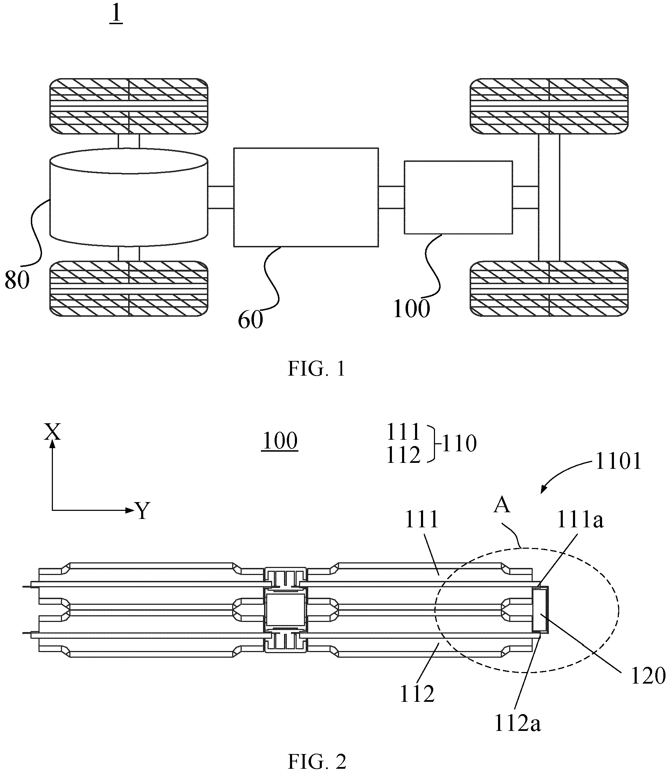

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 80, a controller 60 and a battery 100 may be disposed inside the vehicle 1, and the controller 60 is configured to control the battery 100 to supply power to the motor 80. For example, the battery 100 may be disposed at the bottom, head or tail of the vehicle 1. The battery 100 may be used for supplying power to the vehicle 1. For example, the battery 100 may serve as an operation power supply of the vehicle 1, and is used for a circuit system of the vehicle 1, for example, for a working power demand of the vehicle 1 during startup, navigation, and running. In another embodiment of the present application, the battery 100 can not only serve as an operation power supply of the vehicle 1, but also as a driving power supply of the vehicle 1, replacing or partially replacing fuel or natural gas to provide driving power for the vehicle 1.

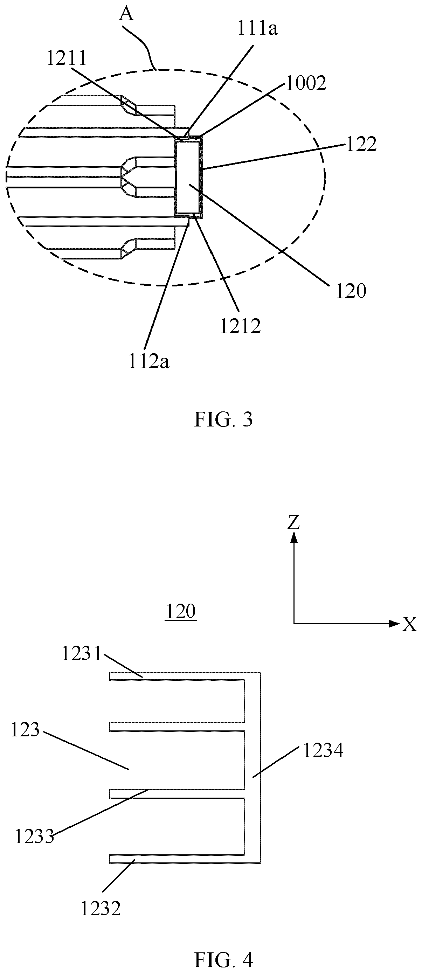

FIG. 2 is a schematic front view of a battery 100 according to an embodiment of the present application. FIG. 3 is a schematic enlarged view of part A in FIG. 2. As shown in FIG. 2, a battery 100 includes a battery module 110 including a first battery cell 111 and a second battery cell 112 that are disposed in a stacked manner along a first direction Z, the first battery cell 111 and the second battery cell 112 are located at a first end 1101 of the battery module 110 in a second direction X, and a first electrode output part 111a of the first battery cell 111 is connected to a second electrode output part 112a of the second battery cell 112. The battery 100 further includes a supporting member 120 disposed in a first accommodating space 1002 (see FIG. 3) enclosed by a first electrode output part 111a and a second electrode output part 112a, and the supporting member 120 is configured to support the first electrode output part 111a and the second electrode output part 112a.

For ease of description, each direction is defined here first. The first direction Z is a thickness direction of the battery 100, the second direction X is a length direction of the battery 100, and the third direction Y is a width direction of the battery 100.

The electrode output part in the present application may refer to a portion of the tab described above that penetrates out of an outer package of the battery cell, or it may also be understood as an electrical connection sheet that is located at outer portion of an outer package of the battery cell and is electrically connected to the tab, which is not limited in the embodiment of the present application.

In an embodiment of the present application, the first electrode output part 111a being connected to the second electrode output part 112a may refer to that the first electrode output part 111a is welded to the second electrode output part 112a. For example, the first electrode output part 111a and the second electrode output part 112a are welded by ultrasonic or laser. Other connection manners may also be adopted between the first electrode output part 111a and the second electrode output part 112a, for example, the first electrode output part 111a and the second electrode output part 112a may be electrically connected by a conductive adhesive. Optionally, the first electrode output part 111a and the second electrode output part 112a may be directly connected, or may be connected through a connecting member.

In this embodiment, since the first battery cell 111 and the second battery cell 112 are disposed in a stacked manner along the first direction Z, the first electrode output part 111a of the first battery cell 111 and the second electrode output part 112a of the second battery cell 112 are connected, and then they enclose to form the first accommodating space 1002, and the supporting member 120 is disposed in the first accommodating space 1002 to support the first electrode output part 111a and the second electrode output part 112a, which can reduce the risk of tearing between the first electrode output part 111a and the second electrode output part 112a and improve the stability of an electrical connection of the battery 100.

Optionally, a plurality of battery cells in the battery module 110 may be connected in series, that is, a positive electrode output part of one battery cell is connected to a negative electrode output part of another adjacent battery cell. The plurality of battery cells may be arranged in a plurality of rows along the second direction X. For example, as shown in FIG. 2, the plurality of battery cells are arranged in two rows along the second direction X. Electrode output parts at one end of the battery module 110 along the second direction X are electrically connected to an electrode terminal and are drawn out of a shell, and electrode output parts at the other end of the battery module 110 along the second direction X are electrically connected without being drawn out of the shell. For example, the other end is a first end 1101 shown in FIG. 2. For a battery module in which a plurality of battery cells are arranged in two or more rows along a second direction X, a supporting member 120 provided in an embodiment of the present application may be disposed in an accommodating space enclosed by two electrode output parts electrically connected at either end of the battery module along the second direction X, so as to support the two electrode output parts electrically connected.

In other embodiments, a plurality of battery cells in the battery module 110 may also be connected in parallel, or a plurality of battery cells may be connected in series-parallel, that is, connected first in parallel and then in series, or connected first in series and then in parallel.

Optionally, the supporting member 120 includes two supporting faces disposed oppositely along the first direction Z, and the two supporting faces are configured to support the first electrode output part 111a and the second electrode output part 112a, respectively. For example, as shown in FIG. 3, the two supporting faces include a first supporting face 1211 and a second supporting face 1212, the first supporting face 1211 is configured to support the first electrode output part 111a, and the second supporting face 1212 is configured to support the second electrode output part 112a.

In this embodiment, the two supporting faces of the supporting member 120 support the first electrode output part 111a and the second electrode output part 112a, respectively, which can reduce the risk of tearing between the first electrode output part 111a and the second electrode output part 112a.

Optionally, as shown in FIG. 3, the supporting member 120 further includes a connecting face 122, and the two supporting faces extend towards the battery module 110 from two ends of the connecting face 122 in the first direction Z, respectively. The first supporting face 1211 is disposed opposite to the second supporting face 1212 along the first direction Z, and the connecting face 122 connects the first supporting face 1211 and the second supporting face 1212.

Optionally, the first electrode output part 111a and the second electrode output part 112a may be directly connected, that is, the first electrode output part 111a may be bent towards the second electrode output part 112a along the first direction Z, and the second electrode output part 112a may be bent towards the first electrode output part 111a along the first direction Z, such that the first electrode output part 111a is in contact with and connected to the second electrode output part 112a. In the second direction X, a gap exists between the connecting face 122 and the first electrode output part 111a and the second electrode output part 112a. Optionally, the first electrode output part 111a and the second electrode output part 112a may be connected through a connecting member. For example, the connecting member is groove-shaped, two side walls of the connecting member are connected to the first electrode output part 111a and the second electrode output part 112a, respectively, a bottom wall of the connecting member is disposed opposite to the connecting face 122, and a gap exists between the connecting face 122 and the bottom wall of the connecting member.

In this embodiment, in the second direction X, a gap exists between the supporting member 120 and the first electrode output part 111a and the second electrode output part 112a or a gap exists between the supporting member 120 and a connecting member configured to connect the first electrode output part 111a and the second electrode output part 112a, which can prevent a supporting force against the electrode output parts from damaging the electrode output parts.

Optionally, as shown in FIG. 4, the supporting member 120 has a cavity 123, the supporting member 120 includes two supporting walls disposed oppositely along the first direction Z. For example, the two supporting walls include a first supporting wall 1231 and a second supporting wall 1232. The two supporting walls are side walls of the cavity 123, and the two supporting faces of the supporting member 120 are two faces of the two supporting walls facing away from each other, respectively.

In this embodiment, the supporting member 120 is configured as a cavity structure, which can reduce the weight of the supporting member 120, thereby reducing the weight of the battery 100.

Optionally, as shown in FIG. 4, the supporting member 120 may further include at least one supporting rib 1233 disposed between the two supporting walls, that is, the first supporting wall 1231 and the second supporting wall 1232. In other words, the supporting member 120 further includes a connecting wall 1234 and at least one supporting rib 1233 protruding from the connecting wall 1234 toward the battery module 110, and the connecting wall 1234 is a bottom wall of the cavity 123.

In this embodiment, the supporting rib 1233 is disposed between the first supporting wall 1231 and the second supporting wall 1232, which can enhance the rigidity of the supporting member 120.

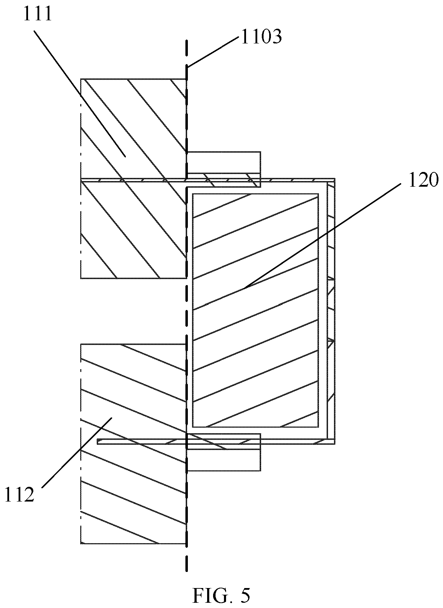

Optionally, the battery cell in the embodiment of the present application is a pouch battery cell. In other words, the battery cell in the embodiment of the present application is a soft pack battery cell. Generally, an electrode assembly of a soft pack battery cell is accommodated in a packaging bag, edges of the packaging bag may be sealed and connected by means of hot pressing, thereby forming a sealing part, and electrode output parts extend to an outer portion of the packaging bag, so as to realize charging and discharging of the battery cell. Optionally, as shown in FIG. 5, in the second direction X, the supporting member 120 extends to a packaging position 1103 of the first battery cell 111 and the second battery cell 112.

In this embodiment, the battery cell is configured as a pouch battery cell, which can reduce the weight of the battery and improve the energy density. In addition, the supporting member 120 extends to the packaging position of the first battery cell 111 and the second battery cell 112, which can better support the first electrode output part 111a and the second electrode output part 112a.

Optionally, as shown in FIG. 5, a gap exists between the supporting member 120 and the packaging position 1103 of the first battery cell 111 and the second battery cell 112.

In this embodiment, a gap is provided between the supporting member 120 and the packaging position 1103, which can facilitate the supporting member 120 to be assembled into the first accommodating space 1002 enclosed by the first electrode output part 111a and the second electrode output part 112a.

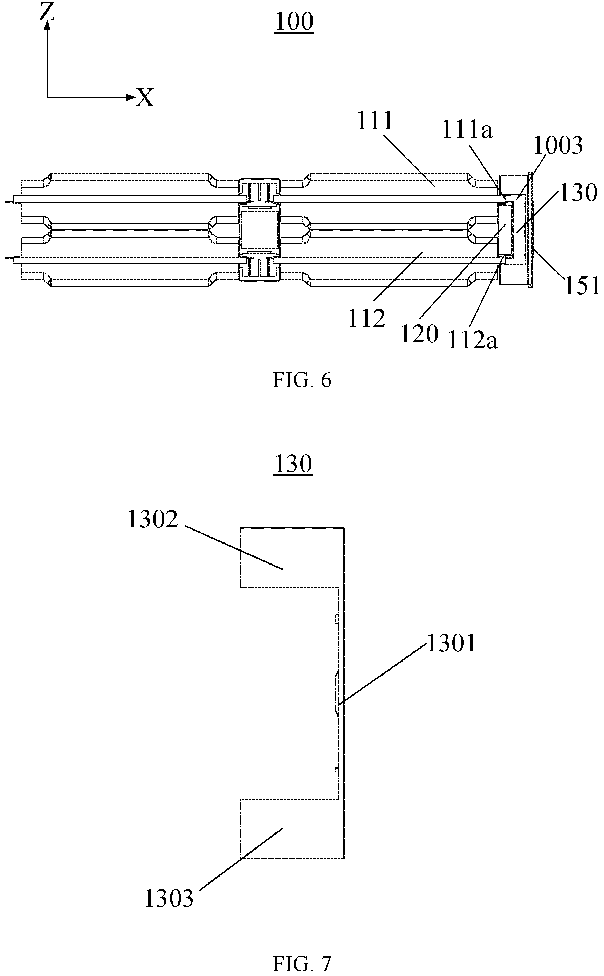

FIG. 6 is another schematic front view of a battery 100 according to an embodiment of the present application. FIG. 7 is a schematic front view of a protection member 130 in FIG. 6. As shown in FIG. 6, the battery 100 further includes: a protection member 130 disposed at the first end 1101 and being away from the battery module 110 relative to the supporting member 120, where a second accommodating space 1003 is formed between the protection member 130 and the supporting member 120, and at least part of the first electrode output part 111a and at least part of the second electrode output part 112a are disposed in the second accommodating space 1003.

In this embodiment, the first electrode output part 111a and the second electrode output part 112a are disposed in the second accommodating space 1003 formed between the supporting member 120 and the protection member 130, which can well protect the first electrode output part 111a and the second electrode output part 112a.

Optionally, as shown in FIG. 7, the protection member 130 may include a first connecting part 1301 and two protrusions, and the two protrusions includes a first protrusion 1302 and a second protrusion 1303. The two protrusions protrude towards the battery module 110 from two ends of the first connecting part 1301 in the first direction Z, and at least part of the first electrode output part 111a and at least part of the second electrode output part 112a are disposed in the second accommodating space 1003 formed between the two protrusions and the supporting member 120.

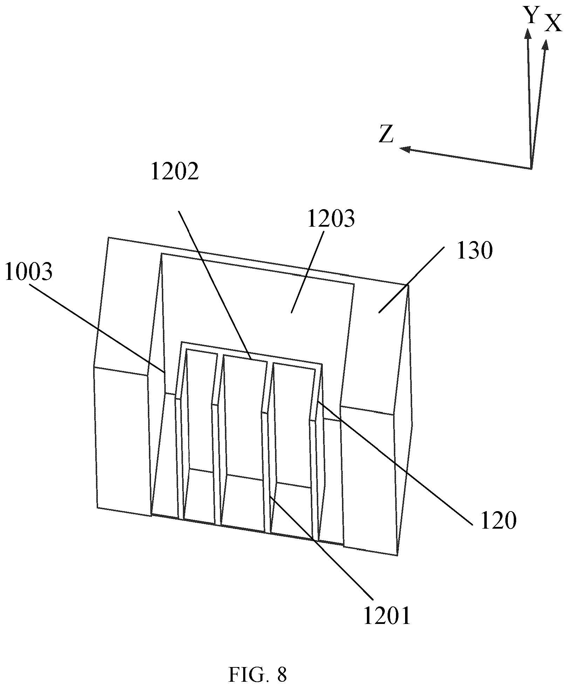

FIG. 8 is a schematic structural diagram of a supporting member 120. As shown in FIG. 8, the supporting member 120 includes a third end 1201 and a fourth end 1202 in a third direction Y, the third end 1201 is fixedly connected to the protection member 130, a first opening 1203 is formed between the fourth end 1202 and the protection member 130, the first opening 1203 is configured to guide at least part of the first electrode output part 111a and at least part of the second electrode output part 112a to be assembled into the second accommodating space 1003.

In this embodiment, one end of the supporting member 120 in the third direction Y is fixedly connected to the protection member 130, and the other end thereof and the protection member 130 form the first opening 1203, so that at least part of the first electrode output part 111a and at least part of the second electrode output part 112a are inserted into the second accommodating space 1003 along the first opening 1203, which can reduce the assembly complexity of the battery 100.

Optionally, in an embodiment of the present application, the supporting member 120 and the protection member 130 may be integrally formed.

In this embodiment, the supporting member 120 and the protection member 130 are integrally formed, which can reduce the production process of the battery 100.

Optionally, in an embodiment of the present application, the supporting member 120 and the protection member 130 are made of a same material. Optionally, both the supporting member 120 and the protection member 130 are made of the same insulating material, for example, both the supporting member 120 and the protection member 130 are made of plastic cement.

Optionally, in another embodiment, the second accommodating space 1003 penetrates through the protection member 130 in the third direction Y. In other words, the supporting member 120 and the protection member 130 are two independent components.

During the assembly of the battery 100, the supporting member 120 may be first inserted along the third direction Y into the first accommodating space 1002 enclosed by the first electrode output part 111a and the second electrode output part 112a. The protection member 130 is then assembled along the second direction X or the third direction Y into the periphery of the first electrode output part 111a and the second electrode output part 112a, so that the first electrode output part 111a and the second electrode output part 112a are disposed in the second accommodating space 1003 formed by the protection member 130 and the supporting member 120.

In this embodiment, the supporting member 120 and the protection member 130 are configured as two independent parts, which can improve the assembly flexibility of the battery 100.

Optionally, in an embodiment of the present application, the supporting member 120 may be made of an insulating material. For example, the supporting member 120 may be made of at least one insulating material of foam, rubber, and plastic cement.

Optionally, in an embodiment of the present application, the supporting member 120 may be fixedly connected to the first electrode output part 111a and the second electrode output part 112a by means of adhesive bonding, respectively. For example, the first supporting face 1211 is fixedly connected to the first electrode output part 111a by means of adhesive bonding, and the second supporting face 1212 is fixedly connected to the second electrode output part 112a by means of adhesive bonding.

In this embodiment, the supporting member 120 is fixedly connected to the first electrode output part 111a and the second electrode output part 112a by means of adhesive bonding, which can improve the structural strength between the supporting member 120 and the first electrode output part 111a and the second electrode output part 112a, such that the supporting member 120 can better support the first electrode output part 111a and the second electrode output part 112a.

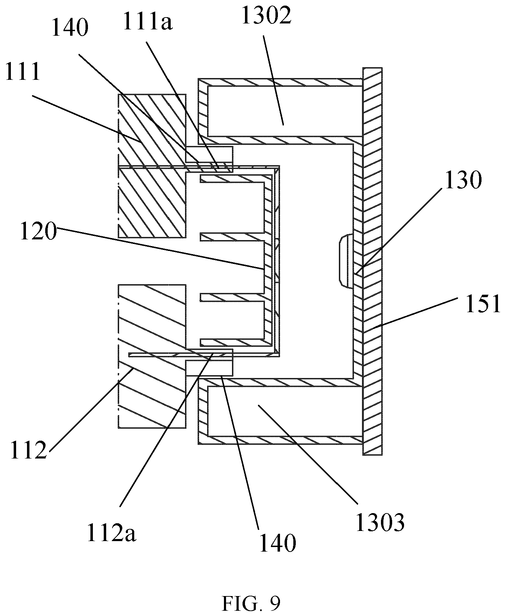

Optionally, as shown in FIG. 9, the two protrusions of the protection member 130 are fixedly connected to the first electrode output part 111a and the second electrode output part 112a by means of adhesive bonding, respectively. For example, a first protrusion 1302 is fixedly connected to the first electrode output part 111a through a structural adhesive 140, and a second protrusion 1303 is fixedly connected to the second electrode output part 112a through the structural adhesive 140. In one embodiment, after the completion of the assembly of the supporting member 120 and the protection member 130, dispensing may be performed on a gap between the packaging position of the first battery cell 111 and the second battery cell 112 and the two protrusions, so as to form the structural adhesive 140. In another embodiment, the two protrusions may be provided with adhesive injection holes, through which the structural adhesive 140 is introduced between the first electrode output part and the second electrode output part and the two protrusions.

Optionally, as shown in FIG. 6 and FIG. 9, the battery 100 further includes a first end cover 151 disposed at a first end 1101, and the first end cover 151 is fixedly connected to the first connecting part 1301 of the protection member 130.

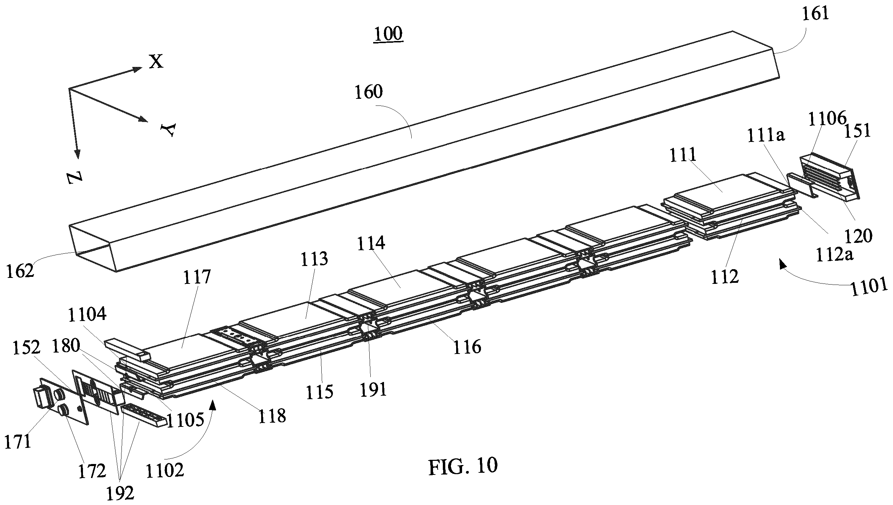

FIG. 10 shows a schematic exploded view of a battery 100 according to an embodiment of the present application. As shown in FIG. 10, a battery 100 includes: a battery module 110, and the battery module 110 includes a first end 1101 and a second end 1102 in a second direction X. The battery module 110 includes: a first battery cell 111 and a second battery cell 112 that are disposed at the first end 1101 and disposed in a stacked manner along a first direction Z; a connecting member 1106 configured to electrically connect a first electrode output part 111a of the first battery cell 111 to a second electrode output part 112a of the second battery cell 112; a supporting member 120 disposed in a first accommodating space enclosed by the first electrode output part 111a and the second electrode output part 112a; a housing 160 provided with two openings opposite each other in the second direction X, for example, a second opening 161 and a third opening 162; a first end cover 151 disposed at the first end 1101; and a second end cover 152 disposed at the second end 1102. The first end cover 151 covers the second opening 161, and the second end cover 152 covers the third opening 162, such that the battery module 110 and the supporting member 120 are packaged in the housing 160.

Optionally, as shown in FIG. 10, the second end cover 152 is provided with a positive electrode terminal 171 and a negative electrode terminal 172, a positive electrode output part 1104 of the battery module 110 is electrically connected to the positive electrode terminal 171, and a negative electrode output part 1105 of the battery module 110 is electrically connected to the negative electrode terminal 172. In a possible embodiment, the positive electrode output part 1104 and the positive electrode terminal 171 may be directly connected, and the negative electrode output part 1105 and the negative electrode terminal 172 may be directly connected. In another possible embodiment, the positive electrode output part 1104 and the positive electrode terminal 171 may be connected by an adapter member 180, and the negative electrode output part 1105 and the negative electrode terminal 172 may be connected by an adapter member 180, as shown in FIG 10.

Optionally, as shown in FIG. 10, the battery module 110 further includes a third battery cell 113 and a fourth battery cell 114 that are connected in series along the second direction X, and a fifth battery cell 115 and a sixth battery cell 116 that are connected in series along the second direction X, where the third battery cell 113 and the fifth battery cell 115 are stacked along the first direction Z, and the fourth battery cell 114 and the sixth battery cell 116 are stacked along the first direction Z. The battery 100 further includes a first support 191, and the first support 191 is disposed between the third battery cell 113 and the fourth battery cell 114, and is disposed between the fifth battery cell 115 and the sixth battery cell 116. The first support 191 is configured to support two electrically connected electrode output parts of the third battery cell 113 and the fourth battery cell 114, and support two electrically connected electrode output parts of the fifth battery cell 115 and the sixth battery cell 116.

Optionally, as shown in FIG. 10, the battery module 110 further includes a seventh battery cell 117 and an eighth battery cell 118 that are located at the second end 1102 and are disposed in a stacked manner along the first direction Z. An electrode output part of the seventh battery cell 117 that is not connected and an electrode output part of the second battery cell 118 that is not connected are a positive electrode output part 1104 and a negative electrode output part 1105 of the battery module 110. The battery 100 further includes a second support 192 to support the positive electrode output part 1104 and the negative electrode output part 1105.

Optionally, the housing 160 may be a metal housing, for example, the housing 160 may be an aluminum housing.

According to an embodiment of the present application, a power consumption apparatus is further provided. The power consumption apparatus may include the battery 100 in the foregoing various embodiments configured to provide electric energy for the power consumption apparatus. Optionally, the power consumption apparatus may be a vehicle, a ship, or a spacecraft.

The battery 100 of the foregoing embodiment is disposed in in the power consumption apparatus, the supporting member 120 is disposed in the first accommodating space 1002 enclosed by the first electrode output part 111a of the first battery cell 111 and the second electrode output part 112a of the second battery cell 112 that are stacked in the first direction Z, so as to support the first electrode output part 111a and the second electrode output part 112a, which can reduce the risk of tearing between the first electrode output part 111a and the second electrode output part 112a and improve the stability of the electrical connection of the battery 100.

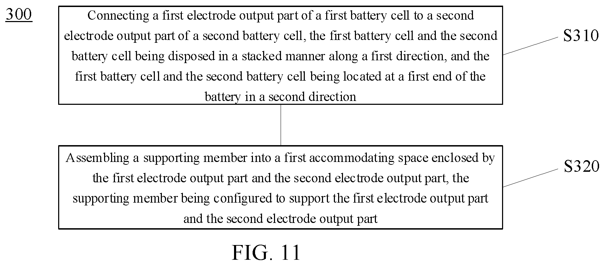

In an embodiment of the present application, a method for producing a battery is further provided. Optionally, the battery may be the battery 100 described in any one of the foregoing embodiments. As shown in FIG. 11, a production method 300 may include some or all of the following contents:
S310, connecting a first electrode output part 111a of a first battery cell 111 to a second electrode output part 112a of a second battery cell 112, where the first battery cell 111 and the second battery cell 112 are disposed in a stacked manner along a first direction Z, and the first battery cell 111 and the second battery cell 112 are located at a first end 1101 of the battery in a second direction X, the first direction Z is a thickness direction of the battery 100, and the second direction X is a length direction of the battery 100; and
S320, assembling a supporting member 120 into a first accommodating space 1002 enclosed by the first electrode output part 111a and the second electrode output part 112a, the supporting member 120 being configured to support the first electrode output part 111a and the second electrode output part 112a.

While the present application has been described with reference to preferred embodiments, various improvements may be made and equivalents may be used to substitute parts therein without departing from the scope of the present application. In particular, as long as there is no structural conflict, technical features mentioned in various embodiments can be combined in any manner. The present application is not limited to the specific embodiments disclosed herein, but includes all technical solutions falling within the scope of the claims.

## Claims

1. A battery (100), comprising:
a battery module (110) comprising a first battery cell (111) and a second battery cell (112) that are disposed in a stacked manner along a first direction (Z), wherein the first battery cell (111) and the second battery cell (112) are located at a first end (1101) of the battery module (110) in a second direction (X), a first electrode output part (111a) of the first battery cell (111) is connected to a second electrode output part (112a) of the second battery cell (112), the first direction (Z) is a thickness direction of the battery (100), and the second direction (X) is a length direction of the battery (100); and
a supporting member (120) disposed in a first accommodating space (1002) enclosed by a first electrode output part (111a) and a second electrode output part (112a), and configured to support the first electrode output part (111a) and the second electrode output part (112a).

2. The battery (100) according to claim 1, wherein the supporting member (120) comprises two supporting faces (1211/1212) disposed oppositely along the first direction (Z), and the two supporting faces (1211/1212) are configured to support the first electrode output part (111a) and the second electrode output part (112a), respectively.

3. The battery (100) according to claim 2, wherein the supporting member (120) further comprises a connecting face (122), and the two supporting faces (1211/1212) extend towards the battery module (110) from two ends of the connecting face (122) in the first direction (Z), respectively;
the first electrode output part (111a) and the second electrode output part (112a) are directly connected, and in the second direction (X), a gap exists between the connecting face (122) and the first electrode output part (111a) and the second electrode output part (112a), or
the first electrode output part (111a) and the second electrode output part (112a) are connected through a connecting member, and in the second direction (X), a gap exists between the connecting face (122) and the connecting member.

4. The battery (100) according to claim 2 or 3, wherein the supporting member (120) has a cavity (123), the supporting member (120) comprises two supporting walls (1231/1232) disposed oppositely along the first direction (Z), the two supporting walls (1231/1232) are side walls of the cavity (123), and the two supporting faces (1211/1212) are two faces of the two supporting walls (1231/1232) facing away from each other, respectively.

5. The battery (100) according to claim 4, wherein the supporting member (120) further comprises at least one supporting rib (1233) disposed between the two supporting walls (1231/1232).

6. The battery (100) according to any one of claims 1 to 5, wherein the battery cell is a pouch battery cell, and in the second direction (X), the supporting member (120) extends to a packaging position (1103) of the first battery cell (111) and the second battery cell (112).

7. The battery (100) according to claim 6, wherein a gap exists between the supporting member (120) and the packaging position (1103).

8. The battery (100) according to any one of claims 1 to 7, wherein the battery (100) further comprises:
a protection member (130) disposed at the first end (1101) and being away from the battery module (110) relative to the supporting member (120), wherein a second accommodating space (1003) is formed between the protection member (130) and the supporting member (120), and at least part of the first electrode output part (111a) and at least part of the second electrode output part (112a) are disposed in the second accommodating space (1003).

9. The battery (100) according to claim 8, wherein the protection member (130) comprises a first connecting part (1301) and two protrusions (1302/1303), the two protrusions (1302/1303) protrude towards the battery module (110) from two ends of the first connecting part (1301) in the first direction (Z), and at least part of the first electrode output part (111a) and at least part of the second electrode output part (112a) are disposed in the second accommodating space (1003) formed between the two protrusions (1302/1303) and the supporting member (120).

10. The battery (100) according to claim 9, wherein the supporting member (120) comprises a third end (1201) and a fourth end (1202) in a third direction (Y), the third end (1201) is fixedly connected to the protection member (130), a first opening (1203) is formed between the fourth end (1202) and the protection member (130), the first opening (1203) is configured to guide at least part of the first electrode output part (111a) and at least part of the second electrode output part (112a) to be assembled into the second accommodating space (1003), and the third direction (Y) is a width direction of the battery (100).

11. The battery (100) according to claim 9 or 10, wherein the supporting member (120) and the protection member (130) are integrally formed.

12. The battery (100) according to claim 11, wherein the supporting member (120) and the protection member (130) are made of a same material.

13. The battery (100) according to claim 9, wherein the second accommodating space (1003) penetrates through the protection member (130) in a third direction (Y), and the third direction (Y) is a width direction of the battery (100).

14. The battery (100) according to claim 13, wherein the supporting member (120) is made of an insulating material.

15. The battery (100) according to claim 14, wherein the supporting member (120) is made of at least one insulating material of foam, rubber, and plastic cement.

16. The battery (100) according to any one of claims 13 to 15, wherein the supporting member (120) is fixedly connected to the first electrode output part (111a) and the second electrode output part (112a) by means of adhesive bonding, respectively.

17. The battery (100) according to any one of claims 9 to 16, wherein the two protrusions (1302/1303) are fixedly connected to the first electrode output part (111a) and the second electrode output part (112a) by means of adhesive bonding, respectively.

18. The battery (100) according to claim 17, wherein the two protrusions (1302/1303) are provided with adhesive injection holes, and an adhesive injection hole is configured to introduce a structural adhesive (140) between the first electrode output part (111a) and the second electrode output part (112a) and the two protrusions (1302/1303).

19. The battery (100) according to any one of claims 9 to 18, wherein the battery (100) further comprises:
a first end cover (151) disposed at the first end (1101), the first end cover (151) being fixedly connected to the first connecting part (1301).

20. The battery (100) according to claim 19, wherein the battery (100) further comprises:
a second end cover (152) disposed at a second end (1102) of the battery module (110) in the second direction (X), wherein the second end cover (152) is provided with a positive electrode terminal and a negative electrode terminal, a positive electrode output part of the battery module (110) is electrically connected to the positive electrode terminal, and a negative electrode output part of the battery module (110) is electrically connected to the negative electrode terminal; and
a housing provided with two openings (161/162), wherein the first end cover (151) and the second end cover (152) cover the two openings (161/162), respectively, so as to package the battery module (110) and the supporting member (120) in the housing.

21. The battery (100) according to any one of claims 1 to 19, wherein a shell of a battery cell in the battery module (110) is a coating film.

22. A power consumption apparatus, comprising the battery (100) according to any one of claims 1 to 21, wherein the battery (100) is configured to provide electric energy for the power consumption apparatus.

23. A method of producing a battery (100), comprising:
connecting a first electrode output part (111a) of a first battery cell (111) to a second electrode output part (112a) of a second battery cell (112), wherein the first battery cell (111) and the second battery cell (112) are disposed in a stacked manner along a first direction (Z), and the first battery cell (111) and the second battery cell (112) are located at a first end (1101) of the battery in a second direction (X), the first direction (Z) is a thickness direction of the battery (100), and the second direction (X) is a length direction of the battery (100); and
assembling a supporting member (120) into a first accommodating space (1002) enclosed by the first electrode output part (111a) and the second electrode output part (112a), the supporting member (120) being configured to support the first electrode output part (111a) and the second electrode output part (112a).
